# EUROPÄISCHE PATENTANMELDUNG

(11) **EP 2 157 109 A1**
(43) Veröffentlichungstag der Anmeldung: **24.02.2010**
(21) Anmeldenummer: 09010440.7
(22) Anmeldetag: 13.08.2009
(51) Int. Cl.: C08G 18/10, C08G 18/12, C08G 18/61, C08G 18/73, C08G 18/75

(54) **Dichtstoff für Teakholz-Versiegelungen und Verfahren zum Herstellen eines derartigen Dichtstoffes**

(30) Priorität: 18.08.2008 DE 102008038288
(71) Anmelder: Kömmerling Chemische Fabrik GmbH, 66954 Pirmasens (DE)
(72) Erfinder: Backes, Timo, 66839 Schmelz (DE); Schwarz, Thomas, 66978 Merzalben (DE); Wittwer, Wolfgand, Dr., 66953 Pirmasens (DE); Schott, Norbert, Dr., 66482 Zweibrücken (DE)
(74) Vertreter: Vièl, Christof

(57) **Zusammenfassung**

Gegenstand der Erfindung ist ein Dichtstoff für Teakholz-Versiegelungen und ein Verfahren zum Herstellen eines Dichtstoffs für Teakholz-Versiegelungen sowie die Verwendung des Dichtstoffes.

Um einen Dichtstoff zu schaffen, dessen Eigenschaften den Anforderungen für Teakholz-Versiegelungen genügt, wird im Rahmen der Erfindung vorgeschlagen, daß der Dichtstoff unter Verwendung eines Polyurethan-Polysiloxan-Präpolymers hergestellt ist, welches aus mindestens bifunktionellen Polyolen unter Zusatz von 1 bis 90 Gew.-% eines bifunktionellen carbinol- oder aminoalkyl-terminierten Polydialkyl-, Polydiaryl- oder Polyalkylarylsiloxans und einem mindestens bifunktionellen aliphatischen Isocyanat hergestellt ist.

## Beschreibung

Gegenstand der Erfindung ist ein Dichtstoff für Teakholz-Versiegelungen und ein Verfahren zum Herstellen eines Dichtstoffs für Teakholz-Versiegelungen.

Die Versiegelung von Teakfugen, insbesondere in Teakdecks, stellt besondere Ansprüche an den angewandten Dichtstoff. Die klimatisch- oder feuchtigkeitsbedingte Dehnung des Teakholzes muß von der elastischen Fugenmasse ohne Rißbildung oder Ablösung vom Holz kompensiert werden. Außerdem wird von dem Dichtstoff erwartet, daß neben einer schnellen Durchhärtung und guten mechanischen Eigenschaften keine Abnutzungsprobleme auftreten. Dafür muß aufgrund der intensiven Sonnenexposition auch eine gute UV-Beständigkeit gewährleistet sein. Aus diesen Gründen kommen nur einige Grundsysteme für den Dichtstoff in Frage.

Bei organischen Polysulfiden werden thiolterminierte hochviskose Präpolymere, bestehend aus Thiolgruppen tragendem Polymer, Füllstoffen, Weichmacher und Haftvermittler oxidativ miteinander vernetzt. Dies erfolgt mittels einer Härterkomponente, die aus einem Oxidationsmittel, wie Mangandioxid, Bleidioxid oder Dichromat, Weichmacher, Füllstoffen, Reglern und Steuerungsmitteln für das Fließ- und Absetzverhalten zusammengesetzt ist. Da die heterogene Oxidationsreaktion mit einem stöchiometrischen Überschuß an Härterkomponente durchgeführt wird besitzen die Polysulfide eine Toleranz gegenüber Mischungs- und Dosierfehlern. Ihr Nachteil bezüglich der Teakholz-Anwendung besteht darin, daß sie als Zweikomponenten-System vorliegen und daher nach dem Vermischen innerhalb kurzer Zeit zu verarbeiten sind. Kostenaufwendig ist zudem die Bereitstellung von Zweikomponenten-Misch- und Dosieranlagen.

Polyurethan-Systeme werden in einer Polyadditionsreaktion aus Polyolen, meist Polyether- oder Polyesterpolyolen verschiedenster Kettenlänge, und Diisocyanaten aufgebaut. Die Aushärtung erfolgt in der Regel durch Feuchtigkeit, wobei erst überschüssiges Isocyanat unter Kohlendioxid-Abspaltung zum entsprechenden Amin reagiert, das unter Vernetzung nukleophil an weiteres überschüssiges Isocyanat addiert. Die durch die Freisetzung von Kohlendioxid hervorgerufene Gasentwicklung bringt jedoch den Nachteil mit sich, daß beim Aushärteprozeß Schaumbildung eintreten kann und daher ein poröses Material entstehen kann, was bei einer Anwendung zur Teakholz-Versiegelung nicht erwünscht ist. Um diese Problematik zu umgehen, können silanterminierte Polyurethane eingesetzt werden. Diese endständigen Alkoxysilane hydrolisieren in Anwesenheit von Luftfeuchtigkeit unter Freisetzung von Alkoholen wie Methanol oder Ethanol. Die dabei entstehenden Silanolgruppen können anschließend unter Vernetzung zu Siloxanen kondensieren.

Wie bereits in der WO 03/018658 A1, der DE 25 43 966 A1 und der DE 24 45 220 A1 beschrieben, besteht beim Aufbau von Polyurethanen die Möglichkeit, reaktive Siloxane, wie beispielsweise hydroxyalkyl- oder aminoalkyl-terminierte Polysiloxane in das Polymerrückgrat chemisch einzubinden, um so verbesserte Eigenschaften zu erzielen.

Die in der DE 39 43 090 A1 beschriebene chemische Verknüpfung von epoxymodifizierten Polysiloxanen, Polyhydrogenalkylsiloxanen oder silanolmodifizierten Polysiloxanen mit Isocyanaten bzw. Isocyanatpräpolymeren ist zweifelhaft. Epoxide reagieren nur langsam oder unter forcierten Bedingungen mit Isocyanaten zu Oxazolidinonen und Polyhydrogenalkylsiloxane besitzen keine funktionelle Gruppe, die mit Isocyanaten chemisch umgesetzt werden kann (Becker, G. W.; Braun, D.; "Kunststoff-Handbuch"; Carl Hanser Verlag München Wien; Abele, L.; "7. Polyurethane"; hrsg. von Günter Oertel; 3., neu bearb. Aufl. - 1993; ISBN 3-446-16263-1). Auch die chemische Bindung des Silanol-Isocyanat-Additionsproduktes ist aufgrund der bekannten hohlen Hydrolyseempfindlichkeit der O-Silylurethanbindung instabil. Nach Andrianov und Astakhin (Astakin, V.V., Losev, I.P., Andrianov, K.A.; Proc. Acad. Sci. USSR 113, 247 (1957) und Astakhin, V.V. Andrianov, K.A., J. General. Chem., USSR 29 2665 (1959)) verläuft die Hydrolyse von Organosilikenurethanen mit Feuchtigkeit auch in Abwesenheit von Katalysatoren, was die Witterungsbeständigkeit stark beeinträchtigt. Daher muß bei der DE 39 43 090 A1 davon ausgegangen werden, daß zwischen den verwendeten Silikonölen und den isocyanatterminierten Polyurethanpräpolymeren keine dauerhafte chemische Bindung vorliegt, weshalb keine dauerhafte Stabilität des Aushärteproduktes gewährleistet ist.

Aufgabe der vorliegenden Erfindung ist die Herstellung eines Dichtstoffes, dessen Eigenschaften den Anforderungen für Teakholz-Versiegelungen genügt. Dazu wird ein elastischer Dichtstoff benötigt, der die klimatisch- oder feuchtigkeitsbedingte Dehnung des Teakholzes ohne Rißbildung oder Ablösung vom Holz Kompensiert und zusätzlich eine hohe Witterungsbeständigkeit, insbesondere eine hohe Abriebfestigkeit, aufweist, so daß kein unerwünschtes Abfärben der Dichtmasse beim Kontakt mit Textilien, beispielsweise Badetextilien, auftritt.

Diese Aufgabe wird erfindungsgemäß dadurch gelöst, daß der Dichtstoff unter Verwendung eines Polyurethan-Polysiloxan-Präpolymers hergestellt ist, welches aus mindestens bifunktionellen Polyolen unter Zusatz von 1 bis 90 Gew.-% eines bifunktionellen carbinol- oder aminoalkyl-terminierten Polydialkyl-, Polydiaryl- oder Polyalkylarylsiloxans und einem mindestens bifunktionellen aliphatischen Isocyanat hergestellt ist.

Der Erfindung liegt die Überlegung zugrunde, daß als Kernkomponente ein Präpolymer benötigt wird,
- das funktionelle Gruppen besitzt, die mit Luftfeuchtigkeit miteinander vernetzen,
- das über eine hinreichend hohe Durchhärtungsgeschwindigkeit verfügt,
- das ohne Aufschäumen oder Blasenbildung aushärtet,
- welches die Anforderungen hinsichtlich Haftung und mechanischer Eigenschaften erfüllt,
- das zudem eine ausreichende UV-Stabilität aufweist,
- dessen ausgehärtetes .Polymer unter extremen klimatischen Bedingungen eine hohe Dehnung besitzt,
- dessen Viskosität eine einwandfreie Verarbeitung der daraus herzustellenden Formulierung auf den marktüblichen Maschinen ermöglicht.

Im zweiten Schritt wird aus dem Präpolymer unter Zugabe von Additiven wie Füllstoffen, Haftvermittler und Trockner eine Formulierung hergestellt,
• die mit Hilfe von Luftfeuchtigkeit blasen- und schaumfrei aushärtet,
• welche eine ausreichende UV-Stabilität besitzt,
• die leicht selbstverlaufend den gesamten Fugenraum ausfüllt,
• deren Aushärteprodukt eine gute Dehnbarkeit besitzt,
• deren Aushärteprodukt hochelastisch ist,
• deren Aushärteprodukt ein niedriges Elastizitätsmodul besitzt, so daß nur geringe Zugspannungen an den Fugenflanken auftreten,
• die eine hohe Lebensdauer erreichen kann und
• bei der keine Abnutzungsprobleme auftreten.

Aufgrund der Wahl des Siloxan-Rückgrat-Polymers kann wegen der guten Wasserdampf- und Gasdurchlässigkeit eine hohe Durchhärtungsgeschwindigkeit ohne Schaumbildung gewährleistet werden. Durch die maßgeschneiderte Herstellung des Polyurethan-Basispolymers können zudem die gewünschten mechanischen und adhäsiven Eigenschaften eingestellt werden. Das Hauptproblem besteht allerdings darin, eine ausreichende UV-Stabilität kombiniert mit ausreichenden mechanischen Eigenschaften zu erzielen. Dies gelingt durch den Zusatz von 1-90 Gew.-% eines difunktionellen carbinol- oder aminoalkyl-terminierten Polydialkyl-, Polydiaryl- oder Polyalkylarylsiloxans, insbesondere (2-Hydroxyethoxy)-methyl-terminiertem Polydimethylsiloxan, zur Polyolkomponente.

Erfindungsgemäß ist vorgesehen, daß das Polyurethan-Polysiloxan-Präpolymer entweder Isocyanatgruppen, vorzugsweise endständige Isocyanatgruppen, vorzugsweise endständige Isocyanatgruppen, oder endständige kondensierbare Silangruppen enthält.

Das eingesetzte Polysiloxan steuert den Hauptbeitrag zur Pigmentbildung bei, wodurch eine exzellente UV-Beständigkeit gewährleistet wird. Aufgrund dieser Eigenschaften erreicht der resultierende Dichtstoff eine hohe Lebensdauer ohne abzufärben.

Im Rahmen der Erfindung liegt auch ein Verfahren zum Herstellen eines Dichtstoffs für Teakholz-Versiegelungen, wobei der Dichtstoff unter Verwendung eines isocyanatterminierten Polyurethan-Polysiloxan-Präpolymers hergestellt wird, wobei das Polyurethan-Polysiloxan-Präpolymer aus mindestens bifunktionellen Polyolen unter Zusatz von 1 bis 90 Gew.-% eines bifunktionellen carbinol- oder aminoalkyl-terminierten Polysiloxans und eines mindestens bifunktionellen aliphatischen Isocyanats hergestellt wird.

Ebenso liegt im Rahmen der Erfindung ein Verfahren zum Herstellen eines Dichtstoffs für Teakholz-Versiegelungen, wobei der Dichtstoff unter Verwendung eines silanterminierten Polyurethan-Polysiloxan-Präpolymers hergestellt wird, wobei das Polyurethan-Polysiloxan-Präpolymer aus mindestens bifunktionellen Polyolen unter Zusatz von 1 bis 90 Gew.-% eines bifunktionellen carbinol- oder aminoalkyl-terminierten Polysiloxans und eines mindestens bifunktionellen aliphatischen Isocyanats hergestellt wird.

Es wird bevorzugt, daß die Polyole ausgewählt sind aus der Gruppe bestehend aus di-, tri- oder tetrafunktionellen Polyethern, Polyestern und carbinol-terminierten Polydialkylsiloxanen unterschiedlicher Kettenlänge.

Eine bevorzugte Ausbildung der Erfindung besteht darin, daß die Isocyanate ausgewählt sind aus der Gruppe bestehend aus aliphatischen Isocyanaten, insbesondere Hexamethylendiisocyanat (HDI), Dicyclohexylmethandüsocyanat (H12-MDI), Isophorondiisocyanat (IPDI), Tetramethylxylylendiisocyanat (TMXDI), sowie deren Derivaten, insbesondere Dimere, Trimere, Biurete und Präpolymerisate aller dieser Isocyanate, auch in Mischungen mit anderen Isocyanaten.

Zur Erfindung gehörig ist auch, daß das Polyurethan-Polysiloxan-Präpolymer entweder entständige Isocyanatgruppen oder endständige Zerwitinoff-aktive Wasserstoffe enthält, wobei das Präpolymer im zweitgenannten Fall mit Isocyanatosilanen zum silanterminierten Präpolymer umgesetzt wird.

In diesem Zusammenhang ist erfindungsgemäß vorgesehen, daß isocyanatterminierte Polyurethan-Polysiloxan-Präpolymere zu Dichtstoff verarbeitet werden.

Ebenso liegt es im Rahmen der Erfindung, daß silanterminierte Polyurethan-Polysiloxan-Präpolymere zu Dichtstoff verarbeitet werden.

Alternativ ist vorgesehen, daß isocyanatterminierte Polyurethan-Polysiloxan-Präpolymere mit Aminosilanen umgesetzt werden.

In diesem Zusammenhang ist auch vorgesehen, daß das umgesetzte Polyurethan-Polysiloxan-Präpolymer anschließend zu Dichtstoff verarbeitet wird.

Schließlich liegt auch die Verwendung eines erfindungsgemäßen Dichtstoffes für die Verfugung von Teakdecks im Rahmen der Erfindung.

Durch die Zugabe von Pigmenten ist es möglich, dem Dichtstoff beliebige Färbungen zu verleihen.

Nachfolgend wird die Erfindung im Detail anhand von Beispielen beschrieben.

Zur Herstellung des Präpolymers wird zunächst das Polyurethan-Basispolymer, das entweder entständige Isocyanat- oder endständige Hydroxylgruppen enthalten kann, aus Polyolen, Isocyanaten und eventuell Weichmachern synthetisiert. Als Polyole kommen di-, tri- oder tetrafunktionelle Polyether, Polyester und auch carbinol- oder aminoalkyl-terminierte Polydialkyl-, Polydiaryl oder Polyalkylarylsiloxane unterschiedlicher Kettenlänge in Frage. Aus Gründen der optischen Alterung werden bei den Isocyanaten bevorzugt aliphatische Isocyanate, wie Hexamethylendiisocyanat (HDI), Dicyclohexylmethandiisocyanat (H12-MDI), Isophorondiisocyanat (IPDI), Tetramethylxylylendiisocyanat (TMXDI), sowie deren Derivate, wie Dimere, Trimere, Biurete und Präpolymerisate aller dieser Isocyanate, auch in Mischungen mit anderen Isocyanaten, bevorzugt. Anschließend können die funtionalisierten Präpolymere mit Organosilanen umgesetzt werden. So erfolgt die Verknüpfung von isocyanatterminierten Präpolymeren mit Aminosilanen; zerewitinoff-aktive Präpolymere werden mit Isocyanatosilanen umgesetzt.

### Beispiel 1: Rezeptur eines isocyanatterminierten Präpolymers:

| | |
|---|---|
| Polyetherpolyol (Lupranol 2043, BASF) | 670 g |
| Carbinol-terminiertes Polysiloxan (Wacker) | 166 g |
| Diisononylphtalat (BASF) | 100 g |
| Isophorondiisocyanat (Bayer) | 64 g |
| Dibutylzinnlaurat (Thorson Chemical) | 0,1 g |

### Arbeitsvorschrift:

In einem geschlossenen 2-1-Rührgefäß werden Polyetherpolyol, carbinol-terminiertes Polysiloxan und Weichmacher vorgelegt. Nach der Zugabe des Isocyanates und des Katalysators wird das Gemisch unter Rühren 2 h bei 50 mbar auf 90°C erhitzt.

### Eigenschaften:

Die opake Flüssigkeit mit leicht thixotropen Eigenschaften hat eine Viskosität von 60.000 mPas.

### Beispiel 2: Rezeptur eines silanterminierten Präpolymers:

| | |
|---|---|
| Polyetherpolyol (Lupranol 2043, BASF) | 655 g |
| Carbinol-terminiertes Polysiloxan (Wacker) | 154 g |
| Diisononylphtalat (BASF) | 100 g |
| Isophorondiisocyanat (Bayer) | 57 g |
| Dibutylzinnlaurat (Thorson Chemical) | 0,1 g |
| Aminosilan (Dynasylan, Evonik) | 33 g |

### Arbeitsvorschrift:

In einem geschlossenen 2-1-Rührgefäß werden Polyetherpolyol, carbinol-terminiertes Polysiloxan und Weichmacher vorgelegt. Nach Zugabe des Isocyanates und des Katalysators wird das Gemisch unter Rühren 2 h bei 50 mbar auf 90°C erhitzt. Anschließend wird auf 50°C abgekühlt, das Aminosilan zugegeben und weitere 45 min bei dieser Temperatur gemischt.

### Eigenschaften:

Die opake Flüssigkeit mit leicht thixotropen Eigenschaften hat eine Viskosität von 90.000 mPas.

### Beispiel zur Formulierung des Dichtstoffes:

| | |
|---|---|
| Präpolymer (Rezepturen siehe oben) | 470 g |
| Kieselsäure | 40 g |
| Kreide | 385 g |
| Eisenoxid | 69 g |
| Farbpigment | 1 g |
| UV-Absorber | 4,5 g |
| Silan I | 15 g |
| Silan II | 15 g |
| Dibutylzinnlaurat | 0,5 g |

### Arbeitsvorschrift:

In einem geschlossenen 1-1-Rührgefäß wird das Präpolymer vorgelegt und Kieselsäure in zwei Portionen untergemischt. Anschließend werden Eisenoxid, Farbpigment und der UV-Absorber hinzugegeben und die Kreide in zwei Portionen bei 1.000 Upm jeweils 3 Minuten eingerührt. Anschließend werden die Silane und der Katalysator hinzugefügt und erst 3 min bei 200 mbar, dann 2 min bei 50 mbar gemischt.

### Eigenschaften:

Es entsteht eine schwarze, pastöse Masse, die leicht selbstverlaufend ist.

Der Dichtstoff gemäß der Erfindung weist eine gute UV-Beständigkeit auf, erfüllt die Anforderungen an die Hafteigenschaften. Er weist in Anlehnung an DIN 53504 eine Zugfestigkeit von mindestens 1 N/mm2 und eine Bruchdehnung von mindestens 50 %auf und in Anlehnung an ASTM 624 Form B eine Weiterreißfestigkeit von mindestens 2 N/mm auf, wobei auch höhere Werte von bis zu 9 N/mm erreicht werden können. Die Shore-A-Härte beträgt in Anlehnung an DIN 53505 10 bis 90, vorzugsweise 45 bis 65.

Zur Beurteilung der Abriebfestigkeit wird der Dichtstoff einem Bewitterungstest ausgesetzt. Dazu wird zunächst eine Teakfuge mit Dichtstoff versiegelt und bis zur Aushärtung gelagert.

Anschließend werden die Oberflächen von Holz und Fuge gleichmäßig abgeschliffen. Der Prüfling wird wahlweise mit bzw. ohne Teaköl behandelt und unter UV-Bestrahlung gelagert (Lampentyp: SOL 1200; Strahlungsleistung: > 4mW/cm2). Die Prüfung erfolgt in 7- bzw. 14-tägigen Intervallen. Dazu wird weißes Papier mit Fingerdruck über die Fuge gerieben und die Intensität der Abfärbung beurteilt.

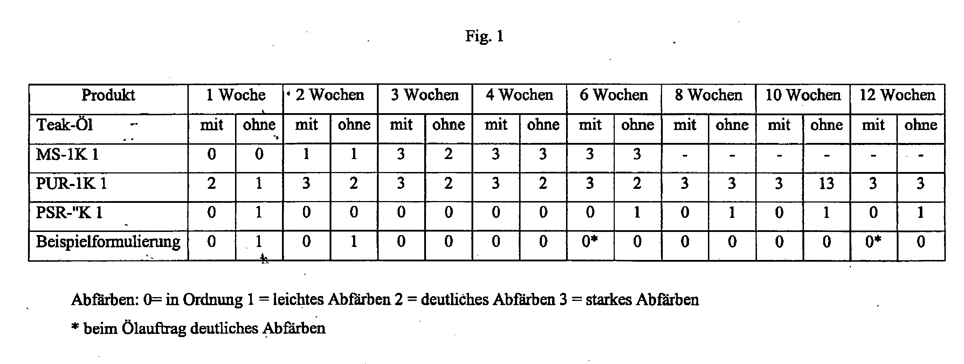

In Fig. 1 wird das Ergebnis eines Vergleichsversuchs von verschiedenen Deckvergußmassen auf originalem Teakholz mit bzw. ohne Teak-Öl dargestellt (UV-Versuch SOL 1200). Es ist der Tabelle zu entnehmen, daß bei der erfindungsgemäßen Beispielformulierung allenfalls zu Beginn ein leichtes Abfärben auftritt und dies auch nur dann, wenn kein Teak-Öl verwendet wurde. Keine der anderen Deckvergußmassen zeigte ein derart günstiges Verhalten.

## Patentansprüche

1. Dichtstoff für Teakholz-Versiegelungen, **dadurch gekennzeichnet, daß** der Dichtstoff unter Verwendung eines Polyurethan-Polysiloxan-Präpolymers hergestellt ist, welches aus mindestens bifunktionellen Polyolen unter Zusatz von 1 bis 90 Gew.-% eines bifunktionellen carbinol- oder aminoalkyl-terminierten Polydialkyl-, Polydiaryl- oder Polyalkylarylsiloxans und einem mindestens bifunktionellen aliphatischen Isocyanat hergestellt ist.

2. Dichtstoff gemäß Anspruch 1, **dadurch gekennzeichnet, daß** das Polyurethan-Polysiloxan-Präpolymer entweder Isocyanatgruppen, vorzugsweise endständige Isocyanatgruppen, vorzugsweise endständige Isocyanatgruppen, oder endständige kondensierbare Silangruppen enthält.

3. Verfahren zum Herstellen eines Dichtstoffs für Teakholz-Versiegelungen, wobei der Dichtstoff unter Verwendung eines isocyanatterminierten Polyurethan-Polysiloxan-Präpolymers hergestellt wird, wobei das Polyurethan-Polysiloxan-Präpolymer aus mindestens bifunktionellen Polyolen unter Zusatz von 1 bis 90 Gew.-% eines bifunktionellen carbinol- oder aminoalkyl-terminierten Polysiloxans und eines mindestens bifunktionellen aliphatischen Isocyanats hergestellt wird.

4. Verfahren zum Herstellen eines Dichtstoffs für Teakholz-Versiegelungen, wobei der Dichtstoff unter Verwendung eines silanterminierten Polyurethan-Polysiloxan-Präpolymers hergestellt wird wobei das Polyurethan-Polysiloxan-Präpolymer aus mindestens bifunktionellen Polyolen unter Zusatz von 1 bis 90 Gew.-% eines bifunktionellen carbinol- oder aminoalkyl-terminierten Polysiloxans und eines mindestens bifunktionellen aliphatischen Isocyanats hergestellt wird.

5. Verfahren gemäß Anspruch 3 oder Anspruch 4, **dadurch gekennzeichnet, daß** die Polyole ausgewählt sind aus der Gruppe bestehend aus di-, tri- oder tetrafunktionellen Polyethern, Polyestern und carbinol-terminierten Polydialkylsiloxanen unterschiedlicher Kettenlänge.

6. Verfahren gemäß Anspruch 3 oder Anspruch 4, **dadurch gekennzeichnet, daß** die Isocyanate ausgewählt sind aus der Gruppe bestehend aus aliphatischen Isocyanaten, insbesondere Hexamethylendiisocyanat (HDI), Dicyclohexylmethandiisocyanat (H12-MDI), Isophorondiisocyanat (IPDI), Tetramethylxylylendiisocyanat (TMXDI), sowie deren Derivaten, insbesondere Dimere, Trimere, Biurete und Präpolymerisate aller dieser Isocyanate, auch in Mischungen mit anderen Isocyanaten.

7. Verfahren gemäß Anspruch 3 oder Anspruch 4, **dadurch gekennzeichnet, daß** das Polyurethan-Polysiloxan-Präpolymer entweder entständige Isocyanatgruppen oder endständige Zerwitinoff-aktive Wasserstoffe enthält, wobei das Präpolymer im zweitgenannten Fall mit Isocyanatosilanen zum silanterminierten Präpolymer umgesetzt wird.

8. Verfahren gemäß Anspruch 7, **dadurch gekennzeichnet, daß** isocyanatterminierte Polyurethan-Polysiloxan-Präpolymere zu Dichtstoff verarbeitet werden.

9. Verfahren gemäß Anspruch 7, **dadurch gekennzeichnet, daß** silanterminierte Polyurethan-Polysiloxan-Präpolymere zu Dichtstoff verarbeitet werden.

10. Verfahren gemäß Anspruch 7, **dadurch gekennzeichnet, daß** isocyanatterminierte Polyurethan-Polysiloxan-Präpolymere mit Aminosilanen umgesetzt werden.

11. Verfahren gemäß Anspruch 10, **dadurch gekennzeichnet, daß** das umgesetzte Polyurethan-Polysiloxan-Präpolymer anschließend zu Dichtstoff verarbeitet wird.

12. Verwendung eines Dichtstoffes gemäß einem der Ansprüche 1 bis 3 zur Verfugung von Teakdecks.
